# EUROPÄISCHE PATENTSCHRIFT

(11) **EP 2 268 859 B1**
(45) Veröffentlichungstag und Bekanntmachung des Hinweises auf die Patenterteilung: **26.02.2014**
(21) Anmeldenummer: 09735878.2
(22) Anmeldetag: 15.04.2009
(51) Int. Cl.: D06F 58/28

(54) **HAUSGERÄT INSBESONDERE ZUM TROCKNEN EINES WÄSCHEPOSTENS**
HOUSEHOLD APPLIANCE, PARTICULARLY FOR DRYING A LAUNDRY ARTICLE
APPAREIL ÉLECTROMÉNAGER EN PARTICULIER POUR SÉCHAGE D'UNE CHARGE DE LINGE

(30) Priorität: 21.04.2008 DE 102008019920
(43) Veröffentlichungstag der Anmeldung: 05.01.2011
(73) Patentinhaber: BSH Bosch und Siemens Hausgeräte GmbH, 81739 München (DE)
(72) Erfinder: DEY, Uwe, 14612 Falkensee (DE); MOSCHÜTZ, Harald, 14979 Großbeeren (DE); VOLKERS, Henrik, 38124 Braunschweig (DE)
(86) Internationale Anmeldenummer: PCT/EP2009/054435
(87) Internationale Veröffentlichungsnummer: WO 2009/130145

(56) Entgegenhaltungen:
- EP-A- 0 029 810
- EP-A- 0 573 703
- DE-A1- 2 643 497
- DE-A1- 19 842 644
- FR-A- 2 894 996

## Beschreibung

Die Erfindung betrifft ein Hausgerät insbesondere zum Trocknen eines Wäschepostens, mit einer Behandlungskammer zum Aufnehmen des Wäschepostens, einem geschlossenen Prozessluftkreislauf zum Führen von Prozessluft durch die Behandlungskammer, welcher Prozessluftkreislauf ein Gebläse zum Treiben der Prozessluft, einen Kondensator zum Auskondensieren mitgeführter Feuchte aus der Prozessluft eine Heizanordnung zum Beheizen der Prozessluft und eine erste Messeinrichtung zur Bestimmung einer Temperatur der Prozessluft beim Einführen in die Behandlungskammer aufweist, und einer Steuereinrichtung zum Steuern des Gebläses und der Heizanordnung in Abhängigkeit von einem ersten Messsignal der ersten Messeinrichtung.

Ein solches Hausgerät geht hervor aus dem Dokument EP-A1-0573703. Dieses bekannte Hausgerät ist ein Waschtrockner, also ein Hausgerät, welches Wäsche sowohl waschen als auch trocknen kann. Es enthält zunächst einen Laugenbehälter zum Aufnehmen einer Waschlauge, und eine in dem Laugenbehälter drehbar angeordnete Trommel, in welche der zu behandelnde Wäscheposten eingelegt werden muss. Im und am Laugenbehälter sind alle üblichen Komponenten einer einfachen Waschmaschine vorhanden, insbesondere eine Heizung für die Waschlauge, eine Zulaufeinrichtung für Wasser und Wäschepflegemittel und eine Ablaufeinrichtung mit Laugenpumpe zum Abpumpen der Waschlauge nach einem Waschprozess. Für die Trocknungsfunktion vorhanden ist ein Trockentunnel, der an zwei Stellen am Laugenbehälter angeschlossen ist, der ein Gebläse, einen Kondensator und eine Heizanordnung enthält und durch den ein im Wesentlichen geschlossener Kreislauf von Prozessluft, welche den in der Trommel befindlichen feuchten Wäscheposten durchsetzt und zyklisch erwärmt und gekühlt wird. Ein Temperatursensor ist vorgesehen, um die Temperatur der in den Laugenbehälter einströmenden Prozessluft messen und in Abhängigkeit von dieser Temperatur die Heizanordnung steuern zu können. Eine entsprechend eingerichtete Steuereinrichtung ist in dem Hausgerät vorgesehen.

Zum technischen Hintergrund betreffend ein Hausgerät insbesondere zum Trocknen eines Wäschepostens wird ergänzend verwiesen auf die Dokumente EP 0 870 859 A1 und US-Patent 5,588,313.

Hinsichtlich gewisser Besonderheiten der Steuerung eines elektrischen Verbrauchers, insbesondere eines Heizkörpers, wird verwiesen auf das Dokument EP 0 719 972 A2. Demgemäß ist es vorgesehen, eine Steuerung für einen an ein Stromversorgungsnetz angeschlossenen Heizkörper derart auszulegen, dass störende Einflüsse von Schaltvorgängen der Steuerung auf das Stromversorgungsnetz möglichst weitgehend vermieden werden.

Aufgabe der Erfindung ist es, ein Hausgerät der eingangs genannten Gattung anzugeben, mit dem ein schnelles und auf geringen Verbrauch von Primärenergie ausgelegtes Trocknen eines Wäschepostens erfolgen kann.

Zur Lösung dieser Aufgabe angegeben wird ein Hausgerät gemäß dem unabhängigen Patentanspruch. Bevorzugte Weiterbildungen dieses Hausgeräts sind in abhängigen Patentansprüchen angegeben, wobei mehrere bevorzugte Weiterbildungen auch dann im Rahmen der Erfindung miteinander kombiniert werden können, wenn dies hierin nicht explizit angegeben ist.

Dementsprechend ist das erfindungsgemäße Hausgerät insbesondere zum Trocknen eines Wäschepostens, umfassend eine Behandlungskammer zum Aufnehmen des Wäschepostens, einen geschlossenen Prozessluftkreislauf zum Führen von Prozessluft durch die Behandlungskammer, welcher Prozessluftkreislauf ein Gebläse zum Treiben der Prozessluft, einen Kondensator zum Auskondensieren mitgeführter Feuchte aus der Prozessluft eine Heizanordnung zum Beheizen der Prozessluft und eine erste Messeinrichtung zur Bestimmung einer Temperatur der Prozessluft beim Einführen in die Behandlungskammer aufweist, und eine Steuereinrichtung zum Steuern des Gebläses und der Heizanordnung in Abhängigkeit von einem ersten Messsignal der ersten Messeinrichtung aufweist, gekennzeichnet durch einen der Steuereinrichtung zugeordneten Analysator zum Bestimmen eines Energiebedarfs zum Trocknen eines in die Behandlungskammer eingegebenen Wäschepostens vor der Einleitung eines Trocknungsprozesses für den Wäscheposten, einen Integrator zum Bestimmen einer bis zu einem jeweiligen Messzeitpunkt über die Heizanordnung zu der Prozessluft erfolgten Energiezufuhr und einen Komparator zum Vergleichen der Energiezufuhr mit dem Energiebedarf und zum Beendigen des Trocknungsprozesses, wenn die Energiezufuhr dem Energiebedarf entspricht.

Bei dem erfindungsgemäßen Hausgerät ist demgemäß vorgesehen, dass ein Energiebedarf für den Trocknungsprozess vorab ermittelt wird. Dies kann erfolgen durch bekannte Maßnahmen wie ein Wägen des Wäschepostens, wobei unterstützend eine Annahme über den Feuchteanteil in dem Wäscheposten gemacht werden kann. Dies gilt insbesondere deshalb, weil ein herkömmlicher Schleuderprozess, mit welchem ein herkömmlicher Waschprozess abgeschlossen wird, den Wäscheposten mit einem relativ genau bekannten Feuchteanteil hinterlässt. Besonderer Vorteil kann dann gezogen werden, wenn das erfindungsgemäße Hausgerät sowohl zum Waschen als auch zum Trocknen des Wäschepostens eingerichtet ist. Es ist inzwischen geläufig, im Rahmen eines Waschprozesses Daten über den zu behandelnden Wäscheposten festzustellen, insbesondere sein Gewicht und die Art der in ihm vorhandenen Textilien. Dazu können in an sich bekannter Weise Messungen der Masse des trockenen Wäschepostens sowie Messungen seiner Aufnahmefähigkeit für Wasser oder Waschlauge erfolgen. Auch kann eine erneute Bestimmung der Masse des noch feuchten Wäschepostens nach Abschluss des Waschprozesses hilfreich sein. In jedem Falle ist es möglich, eine relativ präzise Aussage über den voraussichtlichen Energiebedarf des geplanten Trocknungsprozesses zu treffen, wobei im Sinne der Erfindung auch nicht ausgeschlossen wäre, einem durch Auswertung gegebener Daten eines Wäschepostens erhaltenen Wert einen angemessenen Zuschlag zu geben, um auch bei fehlerbehafteter Auswertung eine Vorgabe für den Energiebedarf zu erhalten, die ein wünschenswertes Ergebnis sicherstellt.

Demgemäß ist eine bevorzugte Weiterbildung des erfindungsgemäßen Hausgeräts dadurch ausgezeichnet, dass der Analysator eine Einrichtung zum Analysieren, insbesondere Wägen und/oder Ermitteln einer Zusammensetzung, des Wäschepostens und zum Ermitteln des Energiebedarfs aus einem Ergebnis des Analysierens umfasst.

Eine besonders bevorzugte Weiterbildung des erfindungsgemäßen Hausgeräts sieht vor, dass das Hausgerät sowohl zum Waschen als auch zum Trocknen des Wäschepostens eingerichtet ist. Dabei ist mit weiterem Vorzug der Analysator eingerichtet zum Analysieren des Wäschepostens vor dem Waschen und Bestimmen zumindest eines Parameters für einen Waschprozess, wie weiter oben dargelegt.

Eine andere bevorzugte Weiterbildung des erfindungsgemäßen Hausgeräts sieht vor, dass die Behandlungskammer eine drehbare Trommel enthält, wobei die Trommel zum Aufnehmen des Wäschepostens bestimmt ist. Die Behandlungskammer kann dabei einen Laugenbehälter umfassen, der seinerseits die Trommel umschließt, wie es für einen Waschtrockner bevorzugt wäre. Die Behandlungskammer kann auch ohne einen umschließenden Laugenbehälter ausgeführt sein, wie es für einen einfachen Wäschetrockner bevorzugt wäre.

Vorzugsweise ist der Prozessluftkreislauf im erfindungsgemäßen Hausgerät im Wesentlichen geschlossen, womit festgelegt wäre, dass die von der im Prozessluftkreislauf zirkulierenden Prozessluft aus dem Wäscheposten verdampfte und weggeführte Feuchtigkeit durch Kondensation niedergeschlagen und von der Prozessluft getrennt wird. In einem herkömmlichen Waschtrockner wird diese niedergeschlagene Feuchtigkeit im Laugenbehälter unterhalb der Trommel gesammelt und durch die ohnehin vorhandene Laugenpumpe abgeführt. Damit wird eine Beaufschlagung einer Umgebung des Hausgeräts mit dieser Feuchtigkeit vermieden und zugleich die Abführung von feuchter Prozessluft aus einem Gebäude, in dem das Hausgerät aufgestellt ist, überflüssig gemacht.

Bevorzugt ist im Prozessluftkreis des erfindungsgemäßen Hausgeräts in Richtung der Prozessluft gesehen die Trocknungskammer hinter der Heizanordnung und der Kondensator hinter der Trocknungskammer angeordnet.

Besonders bevorzugt ist auch eine Weiterbildung des erfindungsgemäßen Hausgeräts, gemäß welcher der Kondensator ein indirekt gekühlter Kondensator ist, in welchem es nicht zum unmittelbaren Kontakt zwischen dem zu kühlenden Luftstrom und dem jeweils verwendeten Kühlmittel kommt. Die Wahl von Wasser, welches aus einem Wasserversorgungsnetz entnommen wird, zum Kondensieren der von der Prozessluft mitgeführten Feuchtigkeit in einem Waschtrockner ist nach wie vor von gewissem Interesse, da sie in einem relativ einfach gestalteten Kondensator realisierbar ist. Vom Standpunkt des möglichst schonenden Umgangs mit natürlichen Ressourcen ist diese Wahl aber abzulehnen.

Ein indirekt gekühlter Kondensator kann dabei als ein durch Luft gekühlter Kondensator realisiert sein, wobei die als Kühlmittel dienende Luft der Umgebung des Hausgeräts entnommen und nach erfolgter Kühlung wieder dorthin zurückgeführt wird. In diesem Zusammenhang kann die Heizanordnung als elektrisch oder thermisch, also durch Verbrennen eines geeigneten Brennstoffs betriebene Heizanordnung ausgelegt sein. Dies ermöglicht nach wie vor ein relativ billiges Hausgerät.

Von großem Interesse in diesem Zusammenhang und besonders bevorzugt im Hinblick auf den Verbrauch von Primärenergie zum Trocknen ist eine Weiterbildung dahingehend, dass der indirekt gekühlte Kondensator als Wärmesenke einer Wärmepumpe im Hausgerät ausgestaltet ist. Dabei wäre die Heizanordnung eine Wärmequelle der Wärmepumpe. Die Wärmepumpe nimmt im Kondensator Wärme aus der Prozessluft auf, pumpt diese Wärme zur Heizanordnung und gibt sie dort wieder an die Prozessluft ab. Dieser Pumpprozess erfordert einen gewissen Aufwand an thermischer Energie, jedoch ist dieser Aufwand bei entsprechender Auslegung der Wärmepumpe erheblich kleiner als der Aufwand an thermischer Energie, der aus dem Heizer bzw. der Wärmequelle dem Prozessluftstrom zufließt. Eine solche Wärmepumpe kann als Kompressor-Wärmepumpe ausgeführt sein, in welcher ein Kältemittel zirkuliert, welches zyklisch im Kondensator unter Aufnehmen von Wärme aus dem Luftstrom verdampft und im Kondensator unter Abgeben von Wärme an den Luftstrom verflüssigt wird. Denkbar ist auch eine mittels eines reversiblen Sorptionsprozesses, eines regenerativen Gaskreisprozesses oder des Peltier-Effektes arbeitende Wärmepumpe. Wichtig ist festzuhalten, dass die in einem solchen Hausgerät zu bestimmende Energiezufuhr diejenige Energiezufuhr ist, welche über die Wärmequelle in den Prozessluftstrom gelangt, und nicht etwa die zu deren Betrieb zur Wärmepumpe gelangte Zufuhr.

Ebenfalls besonders bevorzugt ist eine Weiterbildung des erfindungsgemäßen Hausgeräts, gemäß welcher die Steuereinrichtung eingerichtet ist zum Ansteuern der Heizanordnung derart, dass die Temperatur während des Trocknungsprozesses im Wesentlichen konstant gehalten wird. Damit ist ein relativ einfaches Verfahren zum Steuern der Heizanordnung definiert. Bei diesem Verfahren wird eine sehr genau definierte Abhängigkeit des Einbringens von Wärmeleistung in den Trocknungsprozess über die Heizanordnung erreicht. Nach einer anfänglich notwendigen Aufheizung der Prozessluft und der entsprechenden Komponenten des Hausgeräts definiert sich die zum Aufrechterhalten der Temperatur notwendige Wärmeleistung im Wesentlichen durch diejenige Leistung, welche zum Verdampfen von Feuchtigkeit aus dem Wäscheposten bei der gegebenen Temperatur aufgewendet werden muss. Wenn die Temperatur der Prozessluft beim Anströmen des Wäschepostens konstant gehalten wird, bleiben auch Temperaturen an anderen Stellen des Prozessluftkreislaufes relativ konstant und ändern sich allenfalls in dem Maße, in dem mit fortschreitendem Trocknungsprozess der Wäscheposten trocknet und damit die Rate des Verdampfens von Feuchtigkeit aus dem Wäscheposten absinkt. Somit spielen Transienten, die durch die Abgabe oder Aufnahme von Wärme durch die Komponenten des Hausgeräts entstehen könnten, keine oder allenfalls eine unwesentliche Rolle. Somit ist durch die Beobachtung des Eintrags von Wärmeleistung in den Trocknungsprozess bei weitgehend konstanter Temperatur der Prozessluft am genannten Ort eine präzise Steuerung des Trocknungsprozesses möglich.

Weiter besonders bevorzugt ist eine Weiterbildung des erfindungsgemäßen Hausgeräts dahingehend, dass die Heizanordnung zumindest ein elektrisches. Heizelement sowie eine von der Steuereinrichtung in Abhängigkeit von dem ersten Messsignal mittels eines Steuersignals ansteuerbare Schaltanordnung zum wahlweisen Schalten des zumindest einen Heizelementes umfasst. Während die Bevorzugung einer elektrischen Heizanordnung grundsätzlich selbstverständlich ist, folgt die Bevorzugung einer Heizanordnung mit zumindest einem schaltbaren Heizelement den mittlerweile verfügbaren Schaltungen und Schaltverfahren, die auch mit einem relativ einfach gestalteten Heizelement unter Wahrung der einschlägigen Vorschriften hinsichtlich der Vermeidung von Rückwirkungen auf ein elektrisches Stromversorgungsnetz eine nahezu kontinuierliche Steuerung der Wärmeleistung gestatten.

Ganz besonders bevorzugt ist in diesem Zusammenhang eine Weiterbildung des erfindungsgemäßen Hausgeräts, bei der die Heizanordnung ein erstes elektrisches Heizelement und ein zweites elektrisches Heizelement umfasst und bei dem die Schaltanordnung zum wahlweisen Schalten des ersten und des zweiten Heizelementes bestimmt ist, wobei das erste elektrische Heizelement eine erste elektrische Nennleistung aufweist, welche größer ist als eine zweite elektrische. Nennleistung, welche das zweite elektrische Heizelement aufweist. Es wurde überraschend gefunden, dass bereits eine relativ einfache, gemäß dieser Ausführungsform nur vier Stufen für die abzugebenden Wärmeleistung aufweisende Heizungsanordnung genügt, um eine zur Ausführung des beschriebenen Verfahrens ausreichend konstante Temperatur der Prozessluft zu erreichen. Die auftretenden Transienten beeinträchtigen die erfindungsgemäß vorgesehene Bestimmung des Integrals der Wärmeleistung der Heizanordnung, entsprechend der Zufuhr von Energie bis zum jeweiligen Messzeitpunkt, jedenfalls nicht in wesentlichem Umfang. So ergibt sich eine relativ einfache und robuste Konfiguration der Heizanordnung.

In dieser bevorzugten Heizanordnung im erfindungsgemäßen Hausgerät beträgt weiter bevorzugt die Summe der ersten elektrischen Nennleistung und der zweiten elektrischen Nennleistung etwa 2000 Watt, wobei insbesondere die erste Nennleistung etwa 1400 Watt und die zweite Nennleistung etwa 700 Watt beträgt.

Insbesondere bei dieser bevorzugten Heizanordnung im erfindungsgemäßen Hausgerät ist der Integrator zum Integrieren des Steuersignals eingerichtet. Demnach ist es möglich, vom Vorsehen einer spezifischen Messeinrichtung für die von der Heizanordnung erzeugte Wärmeleistung abzusehen und zur Ermittlung dieser Wärmeleistung auf ein ohnehin vorhandenes Signal in der Steuereinrichtung zurückzukommen. Es liegt im Rahmen der Erfindung, mit der Verwertung dieses Signals auf weitere vorhandene Information zurückzugreifen, die eine Präzisierung der Aussage über die Wärmeleistung erlaubt. Eine in diesem Zusammenhang bevorzugte Maßnahme besteht darin, in dem Integrator eine zweite Messeinrichtung zum Messen einer elektrischen Versorgungsspannung der Heizanordnung vorzusehen und den Integrator weiterhin zum Integrieren des Steuersignals proportional zur Versorgungsspannung einzurichten. Ist diese Versorgungsspannung bekannt, so kann unter Berücksichtigung der im wesentlichen konstanten und der Steuereinrichtung als konstante, fest definierte Parameter vorgebbare elektrischen Widerstände in der Heizanordnung eine sehr präzise Aussage über die Wärmeleistung gewonnen werden.

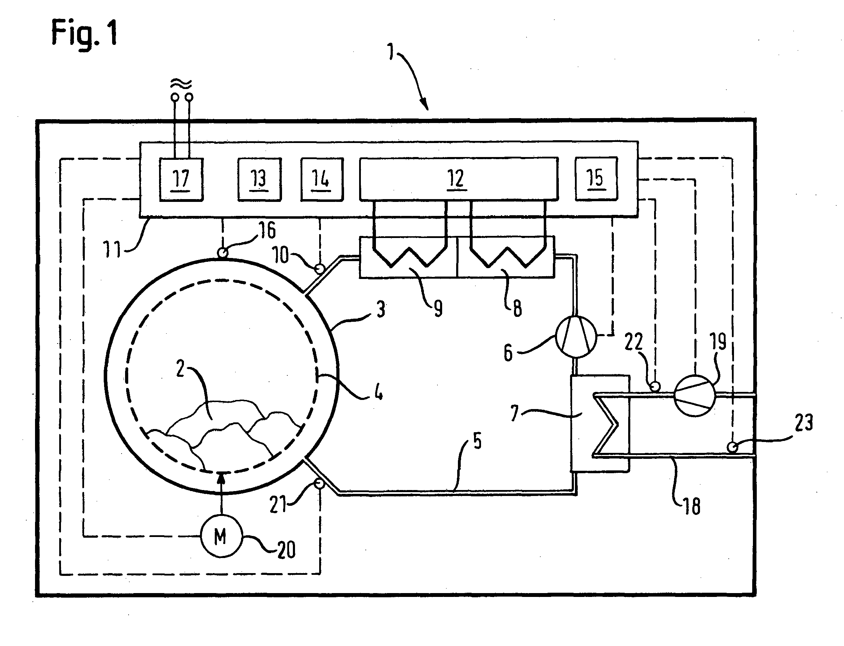

Ein Ausführungsbeispiel der Erfindung ist in der Zeichnung skizziert und wird nachfolgend erläutert.

Die einzige Figur der Zeichnung zeigt ein Hausgerät 1 in Form eines Waschtrockners 1, in welchem ein Wäscheposten 2 insbesondere trockenbar, das heißt für das Ausführungsbeispiel waschbar und trockenbar, ist.

Dazu umfasst das Hausgerät 1 eine Behandlungskammer 3 zum Aufnehmen des Wäschepostens 2, wobei in der Behandlungskammer 3 eine drehbare Trommel 4 angeordnet ist, welche den Wäscheposten 2 aufnimmt. Für den Trocknungsprozess umfasst das Hausgerät 1 weiterhin einen geschlossenen Prozessluftkreislauf 5 zum Führen von Prozessluft durch die Behandlungskammer 3, wobei der Prozessluftkreislauf 5 ein Gebläse 6 zum Treiben der Prozessluft, einen Kondensator 7 zum Auskondensieren mitgeführter Feuchte aus der Prozessluft, eine Heizanordnung 8, 9 zum Beheizen der Prozessluft und eine erste Messeinrichtung 10, vorliegend einen Temperatursensor 10, zur Bestimmung einer Temperatur der Prozessluft beim Einführen in die Behandlungskammer 3 aufweist. Ferner weist das Hausgerät 1 eine Steuereinrichtung 11 zum Steuern insbesondere des Gebläses 6 und der Heizanordnung 8 ,9 in Abhängigkeit von einem ersten Messsignal der ersten Messeinrichtung 10 aufweist. Wie die Steuereinrichtung 11 aufgebaut und strukturiert ist, ist vorliegend weniger relevant. Entsprechend gegenwärtiger Praxis enthält die Steuereinrichtung 11 einen programmierbaren Prozessor nebst Speicher, und alle nachfolgend näher zu erläuternden Module der Steuereinheit 11 bis auf diejenigen Module, die Schaltvorgänge durchführen oder Signale mit weiteren Komponenten des Hausgeräts 1 austauschen müssen, sind Bestandteile eines in dem Speicher niedergelegten Betriebsprogramms.

Die Heizanordnung 8, 9 ist zweiteilig strukturiert und umfasst ein elektrisches erstes Heizelement 8 sowie ein elektrisches zweites Heizelement 9, wobei beide Heizelemente 8, 9 von einer der Steuereinheit 11 zugeordneten Schaltanordnung 12 geschaltet werden. Das erste Heizelement 8 hat eine elektrische Nennleistung von etwa 1400 Watt, das zweite Heizelement 9 hat eine elektrische Nennleistung von etwa 700 Watt. Mit diesen Heizelementen 8 und 9 sowie der Schaltanordnung ist ein vierstufiges Heizsystem mit wahlweise schaltbaren Heizleistungen von 0 Watt, 700 Watt, 1400 Watt und 2100 Watt im Prozessluftkreislauf 5 realisiert. Dieses vierstufige Heizsystem wird man nicht im Sinne üblicher Praxis als "quasi-analog" bezeichnen können und wollen; es hat sich aber gezeigt, dass dieses Heizsystem genügend fein ist, um das nachfolgend zu beschreibende Steuerverfahren für einen besonderen Trocknungsprozess mit befriedigender Genauigkeit ausführen zu können.

Für diesen Trocknungsprozess sind der Steuereinrichtung 11 zugeordnet ein Analysator 13 zum Bestimmen eines Energiebedarfs zum Trocknen des in die Behandlungskammer 3 eingegebenen Wäschepostens 2 vor der Einleitung eines Trocknungsprozesses für den Wäscheposten 2, ein Integrator 14 zum Bestimmen eines Integrals einer der Prozessluft über die Heizanordnung 8, 9 bis zum jeweiligen Messzeitpunkt aufgewendeten Leistung, entsprechend der bis zu diesem Messzeitpunkt erfolgten Energiezufuhr, während des Trocknungsprozesses und einen Komparator 15 zum Vergleichen des Integrals mit dem Energiebedarf und zum Beendigen des Trocknungsprozesses, wenn das Integral bzw. die Energiezufuhr dem Energiebedarf entspricht.

Demnach wird vor dem Einleiten des Trocknungsprozesses durch die Steuereinrichtung 11 bestimmt, wie viel Wärmeenergie zum Trocknen benötigt wird, und demnach der Energiebedarf festgelegt. Dazu greift der Analysator 13 zurück auf eine Einrichtung 16 zum Analysieren, die insbesondere einen Kraftsensor 16 enthält, mit dem ein Wägen des Wäschepostens 2 möglich ist. Vorliegend ist das Hausgerät 1 sowohl zum Waschen als auch zum Trocknen des Wäschepostens 2 eingerichtet. Deshalb kann mittels des Kraftsensors 16 und des Analysators 13 der Wäscheposten 2 vor dem Waschprozess gewogen werden, wenn er noch trocken ist. Während der Einleitung des Waschprozesses kann die Steuereinrichtung mittels geeigneter, an sich bekannter Sensorik, die hier nicht beschrieben ist, die Aufnahmefähigkeit des Wäschepostens 2 für Wasser bestimmen und daraus einen Rückschluss auf die in ihm enthaltenen Textilien schließen. Wird der Wäscheposten auch nach Abschluss des Waschprozesses, der gemäß geläufiger Praxis einen Schleudergang enthalten mag, gewogen, so ist ein relativ guter Rückschluss auf die Menge des enthaltenen Wassers möglich. Unter Verwertung all dieser Information kann der Analysator zu Beginn des auf den Waschprozess folgenden Trocknungsprozesses den Energiebedarf zum Entfernen des enthaltenen Wassers aus dem Wäscheposten 2 recht genau bestimmen.

Während des Trocknungsprozesses wertet der Integrator 14 die über die Heizanordnung 8, 9 in den Prozessluftkanal 5 einfließende Wärmeleistung aus und bestimmt deren Integral als die bis zum jeweiligen Bestimmungszeitpunkt oder Messzeitpunkt erfolgte Energiezufuhr. Er integriert und summiert dazu die entsprechend der Nennleistungen gewichteten Steuersignale, die die Schaltanordnung 12 an die Heizelemente 8 und 9 gegeben hat. Als Korrektiv fließt eine von einer zweiten Messeinrichtung 17, einem Spannungsmesser, gemessene elektrische Spannung des Energieversorgungsnetzes, an welches das Hausgerät 1 angeschlossen ist, als Proportionalitätsfaktor ein.

Der Komparator 15 vergleicht das wie beschrieben ermittelte Integral mit dem vorher ermittelten Energiebedarf und beendet den Trocknungsprozess, sobald das Integral dem Energiebedarf entspricht.

Vorliegend folgt in dem im Wesentlichen geschlossenen Prozessluftkreislauf 5, in Richtung der strömenden Prozessluft gesehen, die Heizanordnung 8, 9 dem Gebläse 6, das Gebläse 6 dem Kondensator 7 und der Kondensator 7 der Behandlungskammer 3. Der Kondensator 7 ist indirekt, nämlich durch Luft gekühlt, wobei ihm die Luft durch einen offenen Kühlluftkanal 18 mittels eines Kühlluftgebläses 19 zugeführt wird. Ein Motor 20 dient dem Antreiben der Trommel 4 mit dem Wäscheposten 2.

Mehrere weitere Temperatursensoren 21, 22, und 23 am Prozessluftkanal 5 bzw. am Kühlluftkanal 18 mögen betrachtet werden als Repräsentanten für verschiedenste weitere Sensoren, die zu einer weiter verfeinerten Steuerung der Wasch- und Trockenprozesse in dem Hausgerät 1 Verwendung finden mögen - wobei die Möglichkeit solcher erweiterter Sensorik nicht auf das hier beschriebene Ausführungsbeispiel beschränkt ist. Schon die verschiedenen Temperaturmesswerte, die mit den Sensoren 21 bis 23 gewonnen werden können, können zur Steuerung des Trocknungsprozesses mit Redundanz, und damit mit besonders großer Stabilität, verwendet werden.

### Bezugszeichenliste

- 1: Hausgerät
- 2: Wäscheposten
- 3: Behandlungskammer
- 4: Trommel
- 5: Prozessluftkreislauf
- 6: Gebläse
- 7: Kondensator
- 8: Heizanordnung, erstes Heizelement
- 9: Heizanordnung, zweites Heizelement
- 10: Erste Messeinrichtung, erster Temperatursensor
- 11: Steuereinrichtung
- 12: Schaltanordnung
- 13: Analysator
- 14: Integrator
- 15: Komparator
- 16: Einrichtung zum Analysieren
- 17: Zweite Messeinrichtung, Spannungsmesser
- 18: Kühlluftkanal
- 19: Kühlluftgebläse
- 20: Motor
- 21: zweiter Temperatursensor
- 22: dritter Temperatursensor
- 23: vierter Temperatursensor

## Patentansprüche

1. Hausgerät (1) insbesondere zum Trocknen eines Wäschepostens (2), mit einer Behandlungskammer (3) zum Aufnehmen des Wäschepostens (2), einem geschlossenen Prozessluftkreislauf (5) zum Führen von Prozessluft durch die Behandlungskammer (3), welcher Prozessluftkreislauf (5) ein Gebläse (6) zum Treiben der Prozessluft, einen Kondensator (7) zum Auskondensieren mitgeführter Feuchte aus der Prozessluft, eine Heizanordnung (8,9) zum Beheizen der Prozessluft und eine erste Messeinrichtung (10) zur Bestimmung einer Temperatur der Prozessluft beim Einführen in die Behandlungskammer (3) aufweist, und einer Steuereinrichtung (11) zum Steuern des Gebläses (6) und der Heizanordnung (8,9) in Abhängigkeit von einem ersten Messsignal der ersten Messeinrichtung (10)**, gekennzeichnet durch** einen der Steuereinrichtung (11) zugeordneten Analysator (13) zum Bestimmen eines Energiebedarfs zum Trocknen eines in die Behandlungskammer (3) eingegebenen Wäschepostens (2) vor der Einleitung eines Trocknungsprozesses für den Wäscheposten (2), einen Integrator (14) zum Bestimmen einer bis zu einem jeweiligen Messzeitpunkt über die Heizanordnung (8,9) zu der Prozessluft erfolgten Energiezufuhr und einen Komparator (15) zum Vergleichen der Energiezufuhr mit dem Energiebedarf und zum Beendigen des Trocknungsprozesses, wenn die Energiezufuhr dem Energiebedarf entspricht.

2. Hausgerät (1) nach Anspruch 1, bei dem der Analysator (13) eine Einrichtung (16) zum Analysieren, insbesondere Wägen und/oder Ermitteln einer Zusammensetzung, des Wäschepostens (2) und zum Ermitteln des Energiebedarfs aus einem Ergebnis des Analysierens umfasst.

3. Hausgerät (1) nach einem der vorigen Ansprüche, welches sowohl zum Waschen als auch zum Trocknen des Wäschepostens (2) eingerichtet ist.

4. Hausgerät (1) nach Anspruch 3, bei dem der Analysator (13) eingerichtet ist zum Analysieren des Wäschepostens (2) vor dem Waschen und Bestimmen zumindest eines Parameters für einen Waschprozess.

5. Hausgerät (1) nach einem der vorigen Ansprüche, bei dem die Behandlungskammer (3) eine drehbare Trommel (4) enthält, wobei die Trommel (4) zum Aufnehmen des Wäschepostens (2) bestimmt ist.

6. Hausgerät (1) nach einem der vorigen Ansprüche, bei dem der Prozessluftkreislauf (5) im Wesentlichen geschlossen ist.

7. Hausgerät (1) nach einem der vorigen Ansprüche, bei dem im Prozessluftkreislauf (5) in Richtung der Prozessluft gesehen die Behandlungskammer (3) hinter der Heizanordnung (8,9) und der Kondensator (7) hinter der Behandlungskammer (3) angeordnet ist.

8. Hausgerät (1) nach einem der vorigen Ansprüche, bei dem der Kondensator (7) ein indirekt gekühlter Kondensator (7) ist.

9. Hausgerät (1) nach einem der vorigen Ansprüche, bei dem die Steuereinrichtung (11) eingerichtet ist zum Ansteuern der Heizanordnung (8,9) derart, dass die Temperatur während des Trocknungsprozesses im Wesentlichen konstant gehalten wird.

10. Hausgerät (1) nach einem der vorigen Ansprüche, bei dem die Heizanordnung (8,9) zumindest ein elektrisches Heizelement (8,9) sowie eine von der Steuereinrichtung (11) in Abhängigkeit von dem ersten Messsignal mittels eines Steuersignals ansteuerbare Schaltanordnung (12) zum wahlweisen Schalten des zumindest einen Heizelementes (8,9) umfasst.

11. Hausgerät (1) nach Anspruch 10, bei dem die Heizanordnung (8,9) ein erstes elektrisches Heizelement (8) und ein zweites elektrisches Heizelement (9) umfasst und bei dem die Schaltanordnung (12) zum wahlweisen Schalten des ersten Heizelementes (8) und des zweiten Heizelementes (9) bestimmt ist, wobei das erste elektrische Heizelement (8) eine erste elektrische Nennleistung aufweist, welche größer ist als eine zweite elektrische Nennleistung, welche das zweite elektrische Heizelement (9) aufweist.

12. Hausgerät (1) nach Anspruch 11, bei dem die Summe der ersten elektrischen Nennleistung und der zweiten elektrischen Nennleistung etwa 2000 Watt beträgt.

13. Hausgerät (1) nach Anspruch 12, bei dem die erste Nennleistung etwa 1400 Watt und die zweite Nennleistung etwa 700 Watt beträgt.

14. Hausgerät (1) nach einem der Ansprüche 10 bis 13, bei dem der Integrator (14) zum Integrieren des Steuersignals eingerichtet ist.

15. Hausgerät (1) nach einem der Ansprüche 10 bis 14, bei dem der Integrator (14) eine zweite Messeinrichtung (17) zum Messen einer elektrischen Versorgungsspannung der Heizanordnung (8,9) umfasst und zum Integrieren des Steuersignals proportional zur Versorgungsspannung eingerichtet ist.

## Claims

1. Domestic appliance (1), particularly for drying a laundry batch (2), with a treatment chamber (3) for receiving the laundry batch (2), a closed process air circuit (5) for conducting process air through the treatment chamber (3), which process air circuit (5) has a fan (6) for driving the process air, a condenser (7) for condensing out entrained moisture from the process air, a heating arrangement (8, 9) for heating the process air and a first measuring device (10) for determining a temperature of the process air on introduction into the treatment chamber (3), and a control device (11) for controlling the fan (6) and the heating arrangement (8, 9) in dependence on a first measurement signal of the first measuring device (10), **characterised by** an analyser (13), which is associated with the control device (11), for determining an energy requirement for drying a laundry batch (2), which is introduced into the treatment chamber (3), before initiation of a drying process for the laundry batch (2), an integrator (14) for determining an energy feed undertaken by way of the heating arrangement (8, 9) to the process air up to a respective measuring time point and a comparator (15) for comparing the energy feed with the energy requirement and for terminating the drying process when the energy feed corresponds with the energy requirement.

2. Domestic appliance (1) according to claim 1, in which the analyser (13) comprises a device (16) for analysing, particularly weighing and/or determining a composition of, the laundry batch (2) and for determining the energy requirement from a result of the analysis.

3. Domestic appliance (1) according to one of the preceding claims, which is equipped not only for washing, but also for drying the laundry batch (2).

4. Domestic appliance (1) according to claim 3, in which the analyser (13) is equipped for analysing the laundry batch (2) before washing and determining at least one parameter for a washing process.

5. Domestic appliance (1) according to any one of the preceding claims, in which the treatment chamber (3) includes a rotatable drum (4), wherein the drum (4) is intended for reception of the laundry batch (2).

6. Domestic appliance (1) according to any one of the preceding claims, in which the process air circuit (5) is substantially closed.

7. Domestic appliance (1) according to any one of the preceding claims, in which the treatment chamber (3) is arranged in the process air circuit (5) behind the heating arrangement (8, 9) and the condenser (7) in the process air circuit (5) behind the treatment chamber (3) as seen in the direction of the process air.

8. Domestic appliance (1) according to any one of the preceding claims, in which the condenser (7) is an indirectly cooled condenser (7).

9. Domestic appliance (1) according to any one of the preceding claims, in which the control device (11) is equipped for so controlling the heating arrangement (8, 9) that the temperature is kept substantially constant during the drying process.

10. Domestic appliance (1) according to any one of the preceding claims, in which the heating arrangement (8, 9) comprises at least one electric heating element (8, 9) as well as a switching arrangement (12), which is activatable by the control device (11) by means of a control signal in dependence on the first measurement signal, for selectable switching of the at least one heating element (8, 9).

11. Domestic appliance (1) according to claim 10, in which the heating arrangement (8, 9) comprises a first electric heating element (8) and a second electric heating element (9) and in which the switching arrangement (12) is intended for selectable switching of the first heating element (8) and the second heating element (9), wherein the first electric heating element (8) has a first electrical rated power which is greater than a second electrical rated power which the second electric heating element (9) has.

12. Domestic appliance (1) according to claim 11, in which the sum of the first electrical rated power and the second electrical rated power is approximately 2000 Watts.

13. Domestic appliance (1) according to claim 12, in which the first rated power is approximately 1400 Watts and the second rated power approximately 700 Watts.

14. Domestic appliance (1) according to any one of claims 10 to 13, in which the integrator (14) is equipped for integrating the control signal.

15. Domestic appliance (1) according to any one of claims 10 to 14, in which the integrator (14) comprises a second measuring device (17) for measuring an electrical supply voltage of the heating arrangement (8, 9) and is equipped for integrating the control signal proportionally to the supply voltage.

## Revendications

1. Appareil ménager (1), notamment destiné à sécher une charge de linge (2), comprenant une chambre de traitement (3) destinée à loger la charge de linge (2), un circuit fermé d'air de processus (5) destiné à guider l'air de processus à travers la chambre de traitement (3), lequel circuit d'air de processus (5) présente un ventilateur (6) pour entraîner l'air de processus, un condensateur (7) destiné à condenser hors de l'air de processus l'humidité guidée en même temps, un dispositif de chauffage (8, 9) destiné à chauffer l'air de processus et un premier dispositif de mesure (10) destiné à déterminer une température de l'air de processus lorsqu'il est introduit dans la chambre de traitement (3), et comprenant un dispositif de commande (11) destiné à commander le ventilateur (6) et le dispositif de chauffage (8, 9) en fonction d'un premier signal de mesure du premier dispositif de mesure (10), **caractérisé par** un analyseur (13) attribué au dispositif de commande (11), destiné à déterminer un besoin en énergie pour sécher une charge de linge (2) entrée dans la chambre de traitement (3) avant l'introduction d'un processus de séchage pour la charge de linge (2), (caractérisé) par un intégrateur (14) destiné à déterminer une alimentation en énergie vers l'air de processus réalisée jusqu'à un moment de mesure respectif par l'intermédiaire du dispositif de chauffage (8, 9) et (caractérisé) par un comparateur (15) destiné à comparer l'alimentation en énergie avec le besoin en énergie et à achever le processus de séchage lorsque l'alimentation en énergie correspond au besoin en énergie.

2. Appareil ménager (1) selon la revendication 1, dans lequel l'analyseur (13) comprend un dispositif (16) pour analyser, notamment pour peser et/ou déterminer une composition de la charge de linge (2) et pour déterminer le besoin en énergie à partir du résultat de l'analyse.

3. Appareil ménager (1) selon l'une quelconque des revendications précédentes, lequel est configuré aussi bien pour laver que pour sécher la charge de linge (2).

4. Appareil ménager (1) selon la revendication 3, dans lequel l'analyseur (13) est configuré pour analyser la charge de linge (2) avant le lavage et pour déterminer au moins un paramètre pour un processus de lavage.

5. Appareil ménager (1) selon l'une quelconque des revendications précédentes, dans lequel la chambre de traitement (3) contient un tambour rotatif (4), le tambour (4) étant destiné à loger la charge de linge (2).

6. Appareil ménager (1) selon l'une quelconque des revendications précédentes, dans lequel le circuit d'air de processus (5) est essentiellement fermé.

7. Appareil ménager (1) selon l'une quelconque des revendications précédentes, dans lequel, dans le circuit d'air de processus (5) vu en direction de l'air de processus, la chambre de traitement (3) est disposée derrière le dispositif de chauffage (8, 9) et le condensateur (7) est disposé derrière la chambre de traitement (3).

8. Appareil ménager (1) selon l'une quelconque des revendications précédentes, dans lequel le condensateur (7) est un condensateur (7) refroidi indirectement.

9. Appareil ménager (1) selon l'une quelconque des revendications précédentes, dans lequel le dispositif de commande (11) est configuré pour commander le dispositif de chauffage (8, 9) de manière à ce que la température soit maintenue essentiellement de manière constante pendant le processus de séchage.

10. Appareil ménager (1) selon l'une quelconque des revendications précédentes, dans lequel le dispositif de chauffage (8, 9) comprend au moins un élément chauffant électrique (8, 9) ainsi qu'un dispositif de commutation (12) commandable par le dispositif de commande (11) au moyen du premier signal de mesure, afin de commuter l'au moins un élément chauffant électrique (8, 9).

11. Appareil ménager (1) selon la revendication 10, dans lequel le dispositif de chauffage (8, 9) comprend un premier élément chauffant électrique (8) et un deuxième élément chauffant électrique (9) et dans lequel le dispositif de commutation (12) est destiné à connecter au choix le premier élément chauffant (8) et le deuxième élément chauffant (9), le premier élément chauffant électrique (8) présentant une première puissance nominale électrique, laquelle est supérieure à une deuxième puissance nominale électrique que présente le deuxième élément chauffant électrique (9).

12. Appareil ménager (1) selon la revendication 11, dans lequel la somme de la première puissance nominale électrique et de la deuxième puissance nominale électrique est d'environ 2000 watts.

13. Appareil ménager (1) selon la revendication 11, dans lequel la première puissance nominale électrique est d'environ 1400 watts et la deuxième puissance nominale électrique est d'environ 700 watts.

14. Appareil ménager (1) selon l'une quelconque des revendications 10 à 13, dans lequel l'intégrateur (14) est configuré pour intégrer le signal de commande.

15. Appareil ménager (1) selon l'une quelconque des revendications 10 à 14, dans lequel l'intégrateur (14) comprend un deuxième dispositif de mesure (17) destiné à mesurer une tension d'alimentation électrique du dispositif de chauffage (8, 9) et est configuré pour intégrer le signal de commande proportionnellement à la tension d'alimentation.
